# EUROPÄISCHE PATENTANMELDUNG

(11) **EP 2 584 244 A1**
(43) Veröffentlichungstag der Anmeldung: **24.04.2013**
(21) Anmeldenummer: 12188983.6
(22) Anmeldetag: 18.10.2012
(51) Int. Cl.: F16L 59/02

(54) **Wärmedämmelement für Rundbehälter sowie Montageverfahren dafür**

(30) Priorität: 21.10.2011 DE 202011051717 U
(71) Anmelder: Beneke Vermietung und Verwaltung GmbH & Co. KG, 27404 Heeslingen (DE)
(72) Erfinder: Beneke, Bernd, 27404 Heeslingen (DE)
(74) Vertreter: Hansen, Jochen

(57) **Zusammenfassung**

Die Erfindung betrifft ein segmentiertes Wärmedämmelement (2) für Rundbehälter (1), insbesondere Biogasfermenter und Biogasnachgärer, mit einer als Zylindermantelfläche ausgebildeten Außenwandung (10) mit einem vorgegebenen Behälteraußenradius (R), wobei das Wärmedämmelement (2) als Verbundelement aus einer äußeren Sicht- und Schutzschicht (21) und einer darin aufgebrachten Wärmedämmschicht (22) vorgegebener Stärke mit einer zum Rundbehälter orientierten Innenseite (24) ausgebildet ist, wobei die Innenseite (24) des Wärmedämmelementes (2) in einer Richtung mit einem dem Behälteraußenradius (R) entsprechenden Radius (R) gewölbt vorgefertigt ist.

Ferner betrifft die Erfindung ein Verfahren zur Erstellung einer Wärmedämmung für einen mit einer als Zylindermantelfläche ausgebildeten Außenwandung (10) mit einem vorgegebenen Behälteraußenradius (R) versehenen Rundbehälter (1), insbesondere Biogasfermenter und Biogasnachgärer, mittels der segmentierten Wärmedämmelemente (2) wobei jedes auf den Behälteraußenradius (R) angepasst gewölbtes Wärmedämmelement (2) vollflächig auf der Außenwandung (10) des Rundbehälters (1) anliegend und an das zuvor befestigte Wärmedämmelement (2) dicht anschließend befestigt wird.

## Beschreibung

Die Erfindung betrifft ein segmentiertes Wärmedämmelement für Rundbehälter, insbesondere Biogasfermenter und Biogasnachgärer, mit einer als Zylindermantelfläche ausgebildeten Außenwandung mit einem vorgegebenen Behälteraußenradius, wobei das Wärmedämmelement als Verbundelement aus einer äußeren Sicht- und Schutzschicht und einer darin aufgebrachten Wärmedämmschicht vorgegebener Stärke mit einer zum Rundbehälter orientierten Innenseite ausgebildet ist. Ferner betrifft die Erfindung ein Verfahren zur Erstellung einer Wärmedämmung mittels der segmentierten Wärmedämmelemente für einen mit einer als Zylindermantelfläche ausgebildeten Außenwandung mit einem vorgegebenen Behälteraußenradius versehenen Rundbehälter, insbesondere Biogasfermenter und Biogasnachgärer.

Rundbehälter sind für das Speichern von flüssigen, gasförmigen, fließfähigen oder schüttfähigen Gütern bekannt, die teils einer Wärmedämmung bedürfen. Ferner sind Rundbehälter für Biogasanlagen, nämlich für den Fermenter und/oder für den Nachgärbehälter bekannt. Da der Fermentationsvorgang beziehungsweise der Nachgärvorgang in einem leicht erhöhten Temperaturbereich oberhalb der üblichen Umgebungstemperatur abläuft, müssen auch diese Behälter wärmegedämmt werden. Die Rundbehälter bestehen meist aus einer zylinderförmigen Betonhülle, die beispielsweise einen Außendurchmesser von 20 Meter oder 25 Meter haben und eine Höhe von 6 Meter aufweisen. Selbstverständlich sind auch andere Dimensionierungen möglich.

Bekannt ist es, derartige Beton-Rundbehälter mit drei bis fünf elastisch gespannten Bändern waagerecht in Umfangsrichtung in ca. 1 Meter Abstand zueinander zu verspannen, um von diesen Spannbändern gehalten zwischen der Außenwandung des Beton-Rundbehälters und den Spannbändern Styroporplatten einzulegen. Die Stryroporplatten werden dabei zweilagig und versetzt zueinander verlegt, um eine möglichst vollständige Wärmedämmung zu erreichen. Anschließend werden als Witterungsschutz Trapezbleche an zuvor montierten Abstandshaltern und daran waagerecht montierten Eisenbändern angeschraubt.

Nachteilig ist, dass auch die doppellagig verlegte Styroporplatten-Dämmung eine erhebliche Beeinträchtigung der Dämmwirkung bedingt, da bei einem üblichen Rundbehälter für Biogasanlagen bei einer Zylindermantelfläche von 481,8 m² 1928 handelsübliche Styroporplatten verbaut werden, womit 2892 Ifdm Anstoßfugen entstehen, die nicht miteinander verbunden sind. Rein rechnerisch entspricht somit bei einer zugrundegelegten Fugenbreite von 2 bis 3 mm dies einer ungedämmten Fläche von ca. 9 m². Ferner ist durch konvektiven Luftaustausch entlang dieser Fugen ein erheblich größerer Wärmeverlust zu beklagen. Desweiteren stellen die Metallabstandshalter erhebliche Wärmebrücken zwischen der Betonwandung des Rundbehälters und der aus Trapezblech bestehenden Außenhaut dar. Weiter sind etwaig erforderliche Aussparungen für Armaturen und Leitungen nur schlecht und lückenhaft mit Styropor zu ummanteln. Auch daraus ergeben sich erhebliche Wärmeverluste.

Zudem ist die bisherige Außenwanddämmung und -verkleidungsmethode bei Rundbehältern für Biogasanlagen äußerts zeitaufwendig und damit kostenintensiv. Die zuvor dargestellten Schwachstellen durch Wärmebrücken und Lücken in der Wärmedämmung aufgrund von Stoßfugen und Aussparungen an Armaturen und Leitungen führen zu erheblichen wirtschaftlichen Nachteilen. Bei einem üblichen Rundbehälter für Biogasanlagen, nämlich einem Biogasfermenter beziehungsweise einem Biogasnachgärer sind mindestens zwei bis drei Wochen Arbeitszeit mit Einrüstung des Rundbehälters anzusetzen. Da während dieser Zeit weitere Gewerke, beispielsweise für die Verlegung von Rohren und elektrischen Leitungen, meist ruhen müssen, bedarf die Erstellung von Biogasanlagen allein aufgrund der arbeitsaufwendig gestalteten Wärmedämmung einem sehr hohen Koordinationsaufwand und insgesamt hohen Baukosten. Durch die Bauart bedingten Wärmebrücken entsteht ein erheblicher Energieverlust, teils wird auch die Funktionsfähigkeit der Biogasanlage und somit der Biogasertrag verringert.

Zwar ist es auch bekannt, PU-Schaum direkt auf Oberflächen aufzuspritzen, um eine Wärmedämmung zu erzielen, jedoch ist dies für großflächige Rundbehälter kaum geeignet, da die zu beschichtende Oberfläche absolut trocken sein muss und bei Betonbehältern zusätzlich eine Grundierung erforderlich wäre.

Ferner ist es aus der WO 00/66933 A1 ein Verfahren und eine Vorrichtung zum Dämmen von Behältern und Rohren bekannt, bei dem der mindestens eine Dämmstoffplattenschicht beabstandet von der Außenwand angebracht und der Zwischenraum zwischen Dämmstoffplattenschicht und Außenwand mit mindestens einer Ortschaumschicht ausgeschäumt wird. Zwar ergibt sich mit dieser Herstellungsweise durch das Ausschäumen eines Hohlraums mit Ortschaum im Wesentlichen eine Fugenfreiheit, gleichwohl ist die Montage der äußeren Dämmstoffplattenschicht weiterhin sehr aufwendig. Ferner ist die Qualität der Ortschaumschicht stark abhängig von den örtlichen Randbedingungen, insbesondere Witterungseinflüssen.

Weiter ist in der DE 1 937 547 A1 eine Isolierung für Rundbehälter beschrieben, die im Querschnitt trapezförmige, parallel liegende längliche Segmentkörper aus Schaumstoff auf einem einstückigen, nicht starren Trägerband aufweist, wobei sich bei der Montage die keilförmigen Freiräume entsprechend beim Anlegen um den Rundbehälter schließen und eine im Wesentlichen geschlossene Wärmedämmschicht bilden. Die Wärmedämmung umschließt somit den Rundbehälter quasi mit einem vieleckigen Zylindermantelringraum.

Weiter ist es aus der EP 0 117 388 A1 oder der WO 88/03630 bekannt, flächig plattenförmige Verbundplatten auf die zylinderförmige Außenwandung eines Rundbehälters aufzulegen, wobei die Platten an ihren Längsseiten mit einer Art Nut-Verbindung miteinander leicht gelenkig verbunden sind, so dass sich wiederum ein vieleckiger Zylindermantel als Dämmung um den Rundbehälter ergibt. Nachteilig an diesen flächig plattenförmigen Dämmstoffelementen zur Dämmung an Rundbehältern ist, dass die flächigen Dämmplatten jeweils nur entlang einer vertikalen Mittellinie auf der Außenwandung des Rundbehälters aufliegen und zu ihren Stößen zu benachbarten Dämmplatten beabstandet von der Außenwandung sind. Entsprechend können bei Fehlstellen Luftzirkulationen hinter der Dämmung entlang der unvermeidlichen Hohlstellen entstehen, so dass die Wärmedämmwirkung erheblich vermindert wird.

Aufgabe der Erfindung ist es daher ausgehend vom letzt genannten Stand der Technik ein Wärmedämmelement beziehungsweise ein Verfahren zu dessen Montage anzugeben, bei dem Hohlstellen und damit mögliche Luftzirkulationen zwischen der Wärmedämmung und der Außenwandung bei einfacher Montage vermieden werden.

Gelöst wird diese Aufgabe mit einem segmentierten Wärmedämmelement gemäß Anspruch 1 sowie mit einem Verfahren zur Erstellung einer Wärmedämmung gemäß Anspruch 12.

Dadurch, dass die Innenseite des Wärmedämmelementes in einer Richtung mit einem dem Behälteraußenradius entsprechenden Radius gewölbt vorgefertigt ist, können diese segmentierten Wärmedämmelemente bei Bedarf vorgefertigt zur Baustelle gebracht und dort mit geringem Montageaufwand unmittelbar auf die zylinderförmige Außenwandung des Rundbehälters aufgesetzt werden. Durch die Ausbildung als Verbundelement, das in einer Richtung dem zur Zylindermantelfläche der Außenwandung des Rundbehälters passenden Radius aufweist, wird ein leichtes, aber formstabiles und passendes Element angegeben, das in einfacher Weise an dem Rundbehälter befestigbar ist. Die Befestigung kann beispielsweise über eine Klebung oder gesonderte Befestigungsmittel erfolgen. Insbesondere wird jedes auf den Behälteraußenradius angepasst gewölbtes Wärmedämmelement vollflächig auf der Außenwandung des Rundbehälters anliegend und an das zuvor befestigte Wärmedämmelement dicht anschließend befestigt.

Wichtig ist bei der Erfindung, dass der Radius der gewölbten Innenseite des Wärmedämmelementes genau dem Behälteraußenradius des Rundbehälters entspricht, womit beim Auflegen der Wärmedämmelemente an der Außenwandung keine Hohlräume und insbesondere keine Hohlraumkanäle entstehen, die zu einer unerwünschten Luftzirkulation hinter der Wärmedämmung bei etwaigen Undichtigkeiten an einigen Fehlstellen in der Wärmedämmung führen können.

Das erfindungsgemäße Wärmedämmelement zeichnet sich dadurch aus, dass die äußere Sicht- und Schutzschicht fest mit der daran anhaftenden Dämmschicht in Art eines Verbundelementes verbunden ist und die innenseitig vorgesehene Folie sowohl als Trennlage während der Herstellungsform des Wärmedämmelementes wie auch als bautechnische Trennlage im Wärmedämmaufbau dienen kann. Durch die Wölbung des Wärmedämmelementes in einer Richtung wird der Anbau an Rundbehältern mit vollflächiger Auflage ermöglicht.

Wenn die Sicht- und Schutzschicht aus Trapezblech gebildet ist, wird in Verbindung mit der auf dem Trapezblech in der gewölbten Form aufgebrachten Dämmschicht ein sehr steifes Verbundelement erzeugt. Dabei ist das Trapezblech quer zu seinen Trapezfalzen in der Fertigung leicht auf den passenden Radius biegbar. Hingegen ist es in Längsrichtung durch die Trapezfalze in seiner geraden Ausrichtung äußerst steif. Zudem eignet sich Trapezblech als Sicht- und Schutzschicht für industrielle Bauten, wie dies aus der Anwendung in vielen Bereichen bekannt ist.

Wenn die äußere Sicht- und Schutzschicht an einer nicht gewölbten Seite des Wärmedämmelementes über die Dämmschicht übersteht und einen äußeren Überlappungsbereich bildet, können zwei nebeneinander gestellte Wärmedämmelemente über den äußeren Überlappungsbereich mit gesonderten Verbindungsmitteln, beispielsweise Schraubverbindungen oder mit durch den äußeren Überlappungsbereich und das darunter liegende Wärmedämmelement hindurchgeschraubte Befestigungsdübel sicher am Rundbehälter befestigt werden. Ferner werden etwaige Ungenauigkeiten an der Stoßfuge an aneinander grenzenden Wärmedämmelementen ausgeglichen.

Das Wärmedämmelement weist vier Seitenkanten auf, wobei beim bestimmungsgemäßen Ansetzen des Wärmedämmelements am Rundbehälter die beiden nicht gewölbten Seiten rechts und links und damit parallel zur Zylinderachse des Rundbehälters angeordnet sind. Diese Seiten weisen also keine Wölbung auf, wobei die gewölbten Seiten bei bestimmungsgemäßer Lage des Wärmedämmelementes die oberen und unteren Kantenseiten sind, die entsprechend des Radius des Rundbehälters gewölbt sind. Die gewölbten Seiten liegen also tangential zur Zylinderachse des Rundbehälters.

Bevorzugt ist auf der Innenseite eine Folie als Trennlage vorgesehen. Dabei sollte die Folie Ammoniak beständig sein.

Wenn die Folie eine PE-Folie oder Aluminium-Folie ist, wobei die Folie an einer nicht gewölbten Seite des Wärmedämmelementes über die Dämmschicht übersteht und einen inneren Überlappungsbereich bildet, kann eine bautechnische Trennung zwischen der Wärmedämmung und dem Betonkörper des Rundbehälters erreicht werden, wobei der innere Überlappungsbereich so bemessen ist, dass er unter das nächste daran anschließende Wärmedämmelement reicht, so dass die Folie vollflächig auf der Zylindermantelfläche aufliegt.

Bevorzugt besteht die Dämmschicht aus aufgeschäumtem Polyurethan, wobei die Dämmschicht in einer Form im Gießschaumverfahren hergestellt wird. PU-Schaum weist eine für den Verwendungszweck ausreichende Festigkeit auf, hat einen guten Dämmwert, ist ausreichend verrottungssicher und kann mit handelsüblichen Schaumgeräten im Gießschaum- und/oder Spritzschaumverfahren industriell leicht verarbeitet werden. Zudem haftet der PU-Schaum sehr gut auf der bevorzugt aus Trapezblech bestehenden Sicht- und Schutzschicht.

Beispielsweise wird bei der Herstellung eines Wärmedämmelementes eine senkrecht stehende Form verwendet, in die auf der Außenseite die Sicht- und Schutzschicht, beispielsweise in Form eines Trapezbleches und auf der Innenseite je nach Bedarf eine als Trennschicht dienende Folie eingelegt werden. Anschließend wird der Hohlraum der stehenden Form mit Gießschaum von unten nach oben befüllt, wobei je nach Aufschäum- und Abbindeverhalten der Eingießvorgang schrittweise von unten nach oben durchgeführt werden kann.

Alternativ können die Wärmedämmelemente auch in einer Verbundplattenfertigungsmaschine im Durchlauf erstellt werden, wobei als unterste Lage das Trapezblech in Längsrichtung in die Maschine eingeführt wird, von oben der PU-Schaum in der gewünschten Stärke aufgebracht wird und anschließend eine Trennfolie aufgelegt wird. Unmittelbar nach dieser Erstellung wird dann die noch nicht erstarrte Verbundplatte durch seitliche Einspannung beim Herausführen aus der Verbundplattenherstellungsmaschine auf den gewünschten Radius gewölbt und bis zum Abbinden des Polyurethanschaums so gehalten.

Wenn an den Fügekanten zweier aneinandergrenzender Wärmedämmelemente entlang gewölbter Seiten und/oder entlang der ersten und/oder zweiten nicht gewölbten Seiten Dichtungen vorgesehen sind, wird auch an den Fügestellen der Wärmedämmelemente eine weitgehend luftdichte Wärmedämmhülle bereitgestellt. Die Dichtungen können beispielsweise so genannte "Kompri-Bänder" sein, die beim Aneinanderfügen und Befestigen der Wärmedämmelemente auf dem Rundbehälter komprimiert werden und somit dauerhaft dicht halten und auch thermische Bewegungen ausgleichen.

Durch die in der Höhe einteiligen Wärmedämmelemente wird ein schneller Arbeitsfortschritt durch eine hohe Flächenüberdeckung des einzelnen Elementes bei gleichzeitig hoher Arbeitssicherheit durch das Aufstellen des einzelnen Elementes auf dem Fundament beziehungsweise einem Fundamentkranz sichergestellt.

Bevorzugt werden die Wärmedämmelemente an der Außenwandung des Rundbehälters mit Dübelankern befestigt. Mit einer rein mechanischen Befestigung ist es möglich, bei Bedarf die angeschraubte Wärmedämmung abzunehmen, um beispielsweise an darunter liegende Armaturen/Leitungen für Wartungs- oder Reparaturzwecke gelangen zu können.

Um herkömmliche Rundbehälter dämmen zu können, beträgt der Radius der Wölbung bevorzugt 9 m bis 18 m. Die Länge in nicht gewölbter Richtung der Wärmedämmelemente sollte der Höhe des Rundbehälters entsprechen. Somit beträgt diese 5 m bis 18 m, insbesondere 5,70 m, oder 6 m oder 9 m.

Ebenso ist die Dämmschichtstärke an den Einsatzzweck anzupassen. Für Biogasanlagenfermenter oder-nachgärer ist eine Dämmschichtstärke für die PU-Schaumdämmung von 6 cm bis 20 cm, insbesondere 8 cm bis 12 cm bevorzugt.

Um einerseits gut transportierbare und handhabbare Wärmedämmelemente zu erhalten und andererseits den Montageaufwand am Rundbehälter möglichst gering zu halten, ist es bevorzugt, dass jedes Wärmedämmelement in Wölbungsrichtung einen Winkel von 3 Grad bis 12 Grad, insbesondere 4,5 Grad oder 6 Grad überdeckt. Im letzteren Falle sind somit 60 segmentierte Wärmedämmelemente für einen Rundbehälter erforderlich, wobei bei einem 18 m Durchmesser messenden Rundbehälter jedes Wärmedämmelement eine Breite von ca. 1 m hat.

Dadurch, dass an Anschlüssen und Armaturen an der Außenwandung des Rundbehälters zugeordnete Ausschnitte in den betreffenden segmentierten Wärmedämmelementen eingebracht werden, dessen Hohlraum nach der Montage ausgeschäumt wird, werden auch außen am Rundbehälter vorstehende Anschlüsse und Armaturen sowie Zuleitungen etc. in einfacher und kostengünstiger Weise beim Aufbau der Wärmedämmung berücksichtigt, wobei die nach der Montage erfolgte Ausschäumung der entstehenden Zwischenräume zu einer hohen Wärmedämmungsgüte führt.

Ein Ausführungsbeispiel der Erfindung wird anhand der angefügten Zeichnung detailliert beschrieben.

Darin zeigt:
- Fig. 1: in einem Horizontalschnitt einen Ausschnitt durch einen Rundbehälter mit daran angebrachten Wärmedämmelementen und
- Fig. 2: eine schematische Darstellung eines Rundbehälters mit daran angebrachten Wärmedämmelementen.

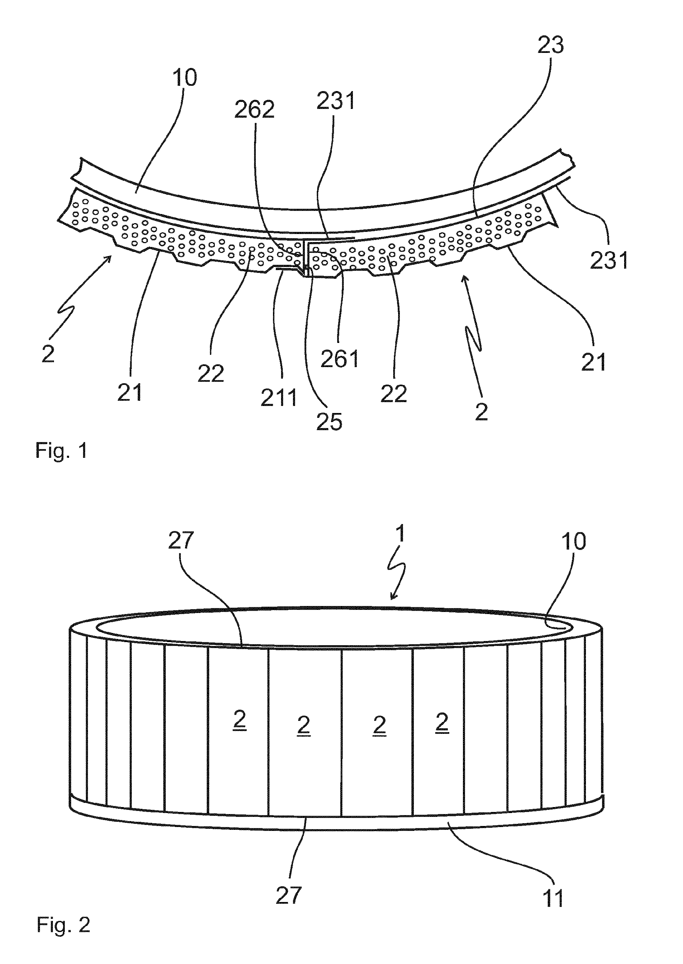

Figur 2 zeigt schematisch einen Rundbehälter 1, beispielsweise Biogasfermenter, der mit einem Wärmedämmungsaufbausystem versehen ist. Der Rundbehälter 1 hat eine zylindermantelförmige Außenwandung 10, die beispielsweise aus Beton hergestellt ist. Der Rundbehälter 1 ist in geeigneter, in Figur 2 nicht dargestellter Weise oben verschlossen. Zur Wärmedämmung der Außenwandung 10 ist dort ein Wärmedämmungsaufbausystem in Form von segmentierten Wärmedämmelementen 2 angeordnet. Die Wärmedämmelemente 2 stehen auf einem Fundamentsockel 11 des Rundbehälters 1 und reichen bis an die Oberkante des Rundbehälters 1. Die Zylindermantelform ist durch eine Wölbung der Wärmedämmelemente 2 ausgebildet, wobei jedes Wärmedämmelement 2 nur einen Bruchteil des Gesamtumfangs, beispielsweise 6 Grad, also 1/60 des Gesamtumfanges abdeckt.

In Figur 1 ist das Wärmedämmungsaufbausystem in einem horizontalen Schnitt dargestellt. Die beispielsweise aus Beton gebildete Außenwandung 10 weist eine entsprechend dem Behälteraußenradius R des Rundbehälters 1 erforderliche Rundung auf. In dem in Figur 1 dargestellten Ausschnitt ist ein Wärmedämmelement 2 vollständig und ein weiteres Wärmedämmelement 2 im Anschnitt dargestellt.

Das Wärmedämmelement 2 besteht von außen nach innen gesehen aus einer äußeren Sicht- und Schutzschicht 21, die beispielsweise aus Trapezblech besteht. Innenseitig der Sicht- und Schutzschicht 21 ist daran anhaftend eine Dämmschicht 22, beispielsweise aus PU-Schaum angebracht. Innenseitig ist die Dämmschicht 22 mit einer Folie 23 als Trennlage, beispielsweise als PE-Folie oder Aluminiumfolie abgeschlossen.

Die Sicht- und Schutzschicht 21 ist im dargestellten Ausführungsbeispiel an einer ersten, nicht gewölbten Seite 261 des Wärmedämmelementes 2 so ausgebildet, dass sie über die Dämmschicht 22 übersteht und einen äußeren Überlappungsbereich 211 bildet. Demgegenüber ist die Folie 23 so ausgebildet, dass sie entsprechend der Ausführung gemäß Figur 1 auf einer gegenüberliegenden, zweiten nicht gewölbten Seite 262 des Wärmedämmelementes 2 übersteht und einen inneren Überlappungsbereich 231 bildet. Ferner sind die aneinander stoßenden Wärmedämmelemente 2,2 mit ihren beiden gegenüberliegenden nicht gewölbten Seiten 261, 262 dicht aneinanderliegend an der Außenwandung 10 des Rundbehälters 1 befestigt. Dabei reichen der innere Überlappungsbereich 231 und äußere Überlappungsbereich 211 jeweils über das angrenzende Wärmedämmelement 2 hinaus, ergeben also eine Überdeckung.

Zwischen den aneinander gefügten Wärmedämmelementen 2,2 sind im Bereich der aneinandergrenzenden Dämmschichten 22, 22 und/oder im Bereich der Überdeckung des äußeren Überlappungsbereichs 211 durchlaufende Dichtungen 25, beispielsweise als so genannte Kompri-Bänder vorgesehen.

Nachfolgend wird die Herstellungsweise eines Wärmedämmelementes 2 sowie die Montage des Wärmedämmungsaufbausystems unter Bezugnahme auf die Figuren beschrieben.

Bevorzugt wird das Wärmedämmelement als Verbundelement in einer dafür vorgesehenen Maschine im Durchlaufverfahren hergestellt. Dabei wird auf ein flächig liegendes der Maschine zugeführtes Trapezblech der erforderliche PU-Schaum zur Erzeugung der Dämmschicht 22 aufgebracht und mit einer Folie 23 versehen. Zum Aushärten des PU-Schaums wird das mit dem Schaum belegte Trapezblech entlang eines Produktionstunnels geführt, bei dem seitlich entlang der nicht gewölbten Seiten 261, 262 eine Belastung auf das Wärmedämmelement ausgeübt wird, so dass sich das Trapezblech 21 in dem gewünschten Maße gemäß des zu belegenden Behälteraußenradius R wölbt und der PU-Schaum abbindet, so dass dann das entsprechend gewölbt vorgefertigte Wärmedämmelement vorliegt.

Nach dieser Produktion steht dann ein Wärmedämmelement 2 in Form eines Verbundelementes in der für den zu dämmenden Rundbehälter 1 passenden Wölbung zur Verfügung. Der innere Überlappungsbereich 231 der Folie 23 wird nach der Produktion entfaltet.

Wenn dann an der Baustelle für den Biogasfermenter oder-nachgärer die Wärmedämmung installiert werden soll, werden die vorgefertigten Wärmedämmelemente 2 von der Fabrikationshalle zur Baustelle befördert und dort auf den Fundamentsockel 11 des Rundbehälters 1 Segment an Segment in der durch die Orientierung der äußeren und inneren Überlappungsbereiche 211, 231 vorgegebenen Richtung montiert. Dabei werden die Wärmedämmelemente 2 eng anliegend aneinander angeordnet, so dass der innere Überlappungsbereich 231 der Folie 23 unter das nächste Wärmedämmelement 2 reicht und der äußere Überlappungsbereich 211 auf der Sicht- und Schutzschicht 21 des nächsten Wärmedämmelementes 2 aufliegt. Dabei werden die Wärmedämmelemente 2 mittels in die Außenwandung 10 des Rundbehälters 1 eingreifenden Dübel vor Ort gesichert. Es bildet sich somit eine vollständig in sich geschlossene Dämmschicht um die Außenwand 10 des Rundbehälters 1, die aufgrund der vorgesehen Dichtungen 25 und Überlappungsbereichen 211, 231 kleine Maßtoleranzen ausgleicht.

An Stellen für Armaturen und Leitungen werden entsprechende Aussparungen in dem segmentierten Wärmedämmelement 2 an den vorgesehenen Stellen eingebracht, die dann anschließend nach Montage der Wärmedämmelemente 2 dicht schließend mit PU-Schaum vor Ort ausgeschäumt werden.

Durch diese vorgefertigten Wärmedämmelemente können Rundbehälter mit dem Wärmedämmungsaufbausystem mit einer vollständig geschlossenen homogenen Dämmschicht versehen werden, die keine Wärmebrücken durch Hohlräume, Fugen oder Spalten enthält. Die Vermeidung von Wärmebrücken und unerwünschten Luftzirkulationen zwischen Dämmung und Wandung führt zu einer ganz erheblichen Energieeinsparung bei Biogasfermentern und - nachgärern sowie zu einem im gesamten Behälter gleichmäßigen Verfahrensablauf und somit zu einer verbesserten Biogasausbeutung.

Durch die einfache Montage vor Ort wird die erforderliche Arbeitszeit für die Anbringung der Wärmedämmung am fertig gestellten Rundbehälter gegenüber den bisher bekannten Dämmverfahren erheblich auf ein bis zwei Tage reduziert.

### Bezugszeichenliste

- 1: Rundbehälter
- 10: Außenwandung
- 11: Fundamentsockel

- 2: Wärmedämmelement
- 21: Sicht- und Schutzschicht
- 211: äußerer Überlappungsbereich

- 22: Dämmschicht

- 23: Folie
- 231: innerer Überlappungsbereich

- 24: Innenseite

- 25: Dichtung

- 261: erste nicht gewölbte Seite
- 262: zweite nicht gewölbte Seite

- 27: gewölbte Seite

## Patentansprüche

1. Segmentiertes Wärmedämmelement (2) für Rundbehälter (1), insbesondere Biogasfermenter und Biogasnachgärer, mit einer als Zylindermantelfläche ausgebildeten Außenwandung (10) mit einem vorgegebenen Behälteraußenradius (R), wobei das Wärmedämmelement (2) als Verbundelement aus einer äußeren Sicht- und Schutzschicht (21) und einer darin aufgebrachten Wärmedämmschicht (22) vorgegebener Stärke mit einer zum Rundbehälter orientierten Innenseite (24) ausgebildet ist, **dadurch gekennzeichnet, dass** die Innenseite (24) des Wärmedämmelementes (2) in einer Richtung mit einem dem Behälteraußenradius (R) entsprechenden Radius (R) gewölbt vorgefertigt ist.

2. Wärmedämmelement (2) nach Anspruch 1, **dadurch gekennzeichnet, dass** die Sicht- und Schutzschicht (21) aus Trapezblech gebildet ist.

3. Wärmedämmelement (2) nach Anspruch 1 oder 2, **dadurch gekennzeichnet, dass** die äußere Sicht- und Schutzschicht (21) an einer ersten nicht gewölbten Seite (261) des Wärmedämmelementes (2) über die Dämmschicht (22) übersteht und einen äußeren Überlappungsbereich (211) bildet.

4. Wärmedämmelement (2) nach Anspruch 1, 2 oder 3, **dadurch gekennzeichnet, dass** auf der Innenseite (24) eine Folie (23) als Trennlage vorgesehen ist.

5. Wärmedämmelement nach Anspruch 4, **dadurch gekennzeichnet, dass** die Folie (23) eine PE-Folie oder Aluminium-Folie ist, wobei die Folie (23) an einer zweiten nicht gewölbten Seite (262) des Wärmedämmelementes (2) über die Dämmschicht (22) übersteht und einen inneren Überlappungsbereich (231) bildet.

6. Wärmedämmelement (2) nach Anspruch 1 oder 2, **dadurch gekennzeichnet, dass** an den Fügekanten zweier aneinandergrenzender Wärmedämmelemente (2, 2) entlang gewölbter Seiten (27) und/oder entlang der ersten und/oder zweiten nicht gewölbten Seiten (261, 262) Dichtungen (25) vorgesehen sind.

7. Wärmedämmelement (2) nach einem der vorangehenden Ansprüche, **dadurch gekennzeichnet, dass** die Dämmschicht (22) aus aufgeschäumtem Polyurethan besteht.

8. Wärmedämmelement (2) nach einem der vorangehenden Ansprüche, **dadurch gekennzeichnet, dass** zur Befestigung in die Außenwandung (10) des Rundbehälters (1) eingreifende Dübel vorgesehen sind.

9. Wärmedämmelement (2) nach einem der vorangehenden Ansprüche, **dadurch gekennzeichnet, dass** die Länge in nicht gewölbter Richtung 5 m bis 18 m, insbesondere 5,70 m, 6,00 m oder 9,00 m beträgt.

10. Wärmedämmelement nach einem der vorangehenden Ansprüche, **dadurch gekennzeichnet, dass** die Dämmschicht (22) eine Stärke von 6 cm bis 20 cm, insbesondere 8 cm bis 12 cm hat.

11. Wärmedämmelement nach einem der vorangehenden Ansprüche, **dadurch gekennzeichnet, dass** es in Wölbungsrichtung einen Winkel von 3 ° bis 12 °, insbesondere 4,5 ° oder 6,0 °, überdeckt.

12. Verfahren zur Erstellung einer Wärmedämmung für einen mit einer als Zylindermantelfläche ausgebildeten Außenwandung (10) mit einem vorgegebenen Behälteraußenradius (R) versehenen Rundbehälter (1), insbesondere Biogasfermenter und Biogasnachgärer, mittels der segmentierten Wärmedämmelemente (2) nach einem der vorangehenden Ansprüche, **dadurch gekennzeichnet, dass** jedes auf den Behälteraußenradius (R) angepasst gewölbtes Wärmedämmelement (2) vollflächig auf der Außenwandung (10) des Rundbehälters (1) anliegend und an das zuvor befestigte Wärmedämmelement (2) dicht anschließend befestigt wird.

13. Verfahren nach Anspruch 12, **dadurch gekennzeichnet, dass** die Wärmedämmelemente (2) an der Außenwandung (10) des Rundbehälters (1) mit Dübelankern befestigt werden.

14. Verfahren nach Anspruch 12 oder 13, **dadurch gekennzeichnet, dass** aneinander anschließende Wärmedämmelemente (2) untereinander abgedichtet werden.

15. Verfahren nach Anspruch 12, 13 oder 14, **dadurch gekennzeichnet, dass** an Anschlüssen und Armaturen an der Außenwandung (10) des Rundbehälters (1) zugeordnete Ausschnitte in den betreffenden segmentierten Wärmedämmelementen (2) eingebracht werden, dessen Hohlraum nach der Montage ausgeschäumt werden.
